# EUROPEAN PATENT SPECIFICATION

(11) **EP 3 958 387 B1**
(45) Date of publication and mention of the grant of the patent: **21.06.2023**
(21) Application number: 20803075.9
(22) Date of filing: 10.07.2020
(51) Int. Cl.: H01M 50/271, H01M 50/30, H01M 10/04, H01M 10/647, H01M 50/209, H01M 50/262, H01M 50/289, H01M 50/502, H01M 50/505

(54) **BATTERY AND RELATED APPARATUS THEREOF, PREPARATION METHOD THEREFOR, AND PREPARATION DEVICE THEREFOR**
BATTERIE UND ZUGEHÖRIGE VORRICHTUNG, HERSTELLUNGSVERFAHREN UND HERSTELLUNGSVORRICHTUNG DAFÜR
BATTERIE ET APPAREIL ASSOCIÉ DE CELLE-CI, SON PROCÉDÉ DE PRÉPARATION ET SON DISPOSITIF DE PRÉPARATION

(43) Date of publication of application: 23.02.2022
(60) Divisional application: 23171327.2
(73) Proprietor: Contemporary Amperex Technology Co., Limited, Jiaocheng District Ningde City Fujian 352100 (CN)
(72) Inventor: ZENG, Yuqun, Ningde City Fujian 352100 (CN); ZENG, Zhimin, Ningde City Fujian 352100 (CN); WU, Kai, Ningde City Fujian 352100 (CN); CHEN, Xingdi, Ningde City Fujian 352100 (CN); WANG, Peng, Ningde City Fujian 352100 (CN); CHEN, Xiaobo, Ningde City Fujian 352100 (CN); LI, Yao, Ningde City Fujian 352100 (CN)
(74) Representative: Pfenning, Meinig & Partner mbB
(86) International application number: PCT/CN2020/101441
(87) International publication number: WO 2022/006896

(56) References cited:
- CN-A- 110 061 329
- CN-A- 111 106 277
- CN-U- 208 256 764
- CN-U- 208 256 764
- CN-U- 209 071 461
- CN-U- 209 401 662
- CN-U- 209 822 772
- CN-U- 210 129 540
- US-A1- 2009 181 288
- US-A1- 2009 220 850
- US-A1- 2009 305 116
- US-A1- 2017 170 439
- US-A1- 2018 351 219

## Description

### TECHNICAL FIELD

The present application relates to the field of batteries, in particular to a battery and a related apparatus, production method and production device therefor.

### BACKGROUND

A chemical battery, electrochemical battery, or electrochemical cell refers to a type of apparatus that converts chemical energy of positive and negative electrode active materials into electric energy through a redox reaction. Unlike an ordinary redox reaction, oxidation and reduction reactions are carried out separately, with the oxidation reaction taking place at a negative electrode and the reduction reaction taking place at a positive electrode, and gain and loss of electrons are carried out through an external circuit, and thus a current is formed. This is an essential characteristic of all batteries. After long-term research and development, the chemical battery has ushered in a situation of great varieties and wide applications, for example, it may be a huge device that can fit in a building, or a small device in millimeter. With the development of modern electronic technology, high requirements are put forward for the chemical battery. Every breakthrough in chemical battery technology brings revolutionary development of an electronic device. Many electrochemical scientists in the world have focused their research and development interests in the field of chemical batteries that power electric automobiles.

As a kind of chemical battery, a lithium-ion battery has advantages of small size, high energy density, high power density, multiple recycle times, long storage time, and the like, and has been widely applied in some electronic devices, electric vehicles, electronic toys and electric devices. For example, currently, the lithium-ion battery is widely applied in mobile phones, notebook computers, electromobiles, electric automobiles, electric airplanes, electric ships, electric toy cars, electric toy ships, electric toy aircrafts, electric tools, or the like.

With the continuous development of lithium-ion battery technology, higher requirements are put forward for performance of lithium-ion battery. It is hoped that design factors in multiple aspects can be simultaneously considered for the lithium-ion battery.

US 2009/0181288 A1 provides a cell module has a cell group with a plurality of cells connected to each other. The module comprises a bus bar plate including a bus bar connecting between the cells and an end cover for covering the bus bar plate. The cell module is configure to be fixed with the end cover.

CN209822772U provides a battery module, which comprises a battery pack and an insulating plate, wherein the battery pack comprises a busbarand a plurality of battery units, and each battery unit comprises a tab; the tab comprises a connecting section and a bending section; the busbar is fixed on one side, away from the battery pack, ofthe insulating plate; the insulating plate comprises a plurality of plate assemblies, and the adjacent plate assemblies are connected through connecting plates. A first included angle with an obtuse angle is formed between each plate assembly and the connecting plate connected with the plate assembly; the plate assembly is provided with a guide groove, and each connecting section penetrates through the guide groove and the bent section to be fixedly connected with the busbar. According to the battery module, when the tabs penetrate through the insulating plate, the guide grooves can adjust thepostures of the tabs, and the tabs can penetrate through the battery module easily. After the tab is bent, the bent section can be connected with the busbar, so that the process requirement can be met without reserving a large space between the battery pack and the insulating plate, and the energy density of the battery module is improved.

CN208256764U provides an upper cover subassembly and battery module, the upper cover subassembly includes: the apron has first side and second side, a plurality of busbars, and cover the component. The apron is provided with: a plurality of first through-holes link up the apron along the direction of height respectively, and first recess, formed at the first side of apron and feed through inthe first through -hole that corresponds. A plurality of busbars are fixed in the second side of apron, and each busbar has at least the part to expose in the first through -hole that corresponds. Itaccepts at least and is fixed in in the first recess of apron to cover the component to cover exposing in the part of the first through -hole that corresponds of each busbar. Owing to the apron is formed with first recess, lead to the apron and cover the whole thickness size of following on the direction of height of component for a short time, only need cover exposing in the part of the first through -hole that corresponds of each busbar owing to cover the component simultaneously to need not to cover whole apron, reduced the whole volume that covers the component from this, therefore small,the light in weight of upper cover subassembly.

### SUMMARY

In the existing battery, a bus component is usually arranged between a cover body and a battery cell. This arrangement makes the overall volume of the battery larger. Moreover, the bus component is usually enclosed in a case, and thus a battery management unit electrically connected with the bus component also needs to be installed in the case of the battery (the cover body is, for example, a portion of the case), so that the volume of the case of the battery is large, and the battery management unit is sealed in the case, which is not convenient for subsequent maintenance and replacement.

The present application provides a battery and a related apparatus, production method, and production device therefor to improve performance of a battery.

The invention is defined in the appended claims.

According to a first aspect of the present application, there is provided a battery including: a plurality of battery cells, a cover body, an insulating part, a battery management and a case shell. The plurality of battery cells are configured to be electrically connected to each other through a bus component; a cover body includes an accommodation space configured to install the bus component; and the insulating part is attached to the cover body and provided to cover at least the bus component, and the battery management unit includes a control module and an electrical connection component, and the control module and the bus component are connected by the electrical connection component, the electrical connection component is embedded in the cover body, and the case shell and the cover body collectively enclose and form a case configured to accommodate the plurality of battery cells, and the control module is provided outside the case

According to this solution, a bus component configured to electrically connect a plurality of battery cells in a battery is embedded on a cover body. This arrangement makes the structure of the battery more compact, can improve volume energy density of the battery, and since the bus component is not sealed in a case, part of the structure of a battery management unit may be arranged outside the case of the battery.

In one implementation manner, the accommodation space is a through hole formed on the cover body, and the bus component passes through the through hole and is fixed on the cover body.

According to this solution, the structure of an accommodation space is relatively simple, easy to implement, and low in cost.

In one implementation manner, the insulating part is applied or assembled to the cover body.

According to this solution, it is allowed to assemble or apply an insulating part to a cover body after a bus component is installed in an accommodation space during production, which is relatively simple and easy to implement.

In one implementation manner, the accommodation space is a blind hole formed on the cover body, the bus component is capable of entering the accommodation space through an opening of the accommodation space, and at least a portion of the bus component is accommodated in the accommodation space, and the insulating part is integrally formed with the cover body.

According to this solution, a bus component can be completely embedded in an integrated structure formed by a cover body and an insulating part, and this arrangement can further save space and reduce the overall size of a battery.

According to the above several solutions, components of a battery management unit can be installed outside a case or embedded in a cover body. Compared with a structure that a battery management unit is completely installed in a case, the above several solutions can further save space and reduce the size of the battery, and facilitate maintenance and replacement of the battery management unit.

In one implementation manner, the electrical connection component includes a circuit board configured to be electrically connected with the plurality of battery cells to capture temperature or voltage signals of the plurality of battery cells.

According to this solution, this arrangement makes it possible to obtain a temperature or voltage signal of a battery cell more accurately, so that an overall operating state of a battery can be monitored more accurately.

In one implementation manner, at least one battery cell of the plurality of battery cells includes a pressure relief mechanism, and the pressure relief mechanism is configured to be actuated when an internal pressure of the at least one battery cell reaches a threshold, to relieve the internal pressure, where the pressure relief mechanism and the bus component are respectively arranged on different sides of the at least one battery cell, so that when the pressure relief mechanism is actuated, emissions from the at least one battery cell are discharged in a direction away from the bus component.

According to this solution, through this arrangement of a pressure relief mechanism and a bus component, safety performance of a battery is significantly improved. First, in the case where a battery is used in an electric automobile and thermal runaway occurs inside for example, emissions of a battery cell will not be discharged toward occupants in a driver's cabin, thereby improving safety of the electric automobile using the battery. Secondly, since a pressure relief mechanism and a bus component are respectively arranged on different sides of the battery cell, the emissions of the battery cell will not cause a short circuit of the bus component, thereby significantly reducing the risk caused by the short circuit of the bus component, and improving safety performance of the battery.

In one implementation manner, the battery further includes: a thermal management component, where the thermal management component is configured to accommodate a fluid to adjust temperature of the plurality of battery cells, and the thermal management component is configured to be damaged when the pressure relief mechanism is actuated, so that the emissions from the battery cell pass through the thermal management component.

According to this solution, by providing a thermal management component, a temperature of a battery cell can be controlled more flexibly and actively. In addition, in the case of thermal runaway inside a battery, emissions of the battery cell can also be effectively discharged, thereby reducing a risk caused by poor discharge of the emissions.

In one implementation manner, the thermal management component is configured to be damaged when the pressure relief mechanism is actuated, to allow the fluid to flow out.

According to this solution, this arrangement allows the temperature of high-temperature and high-pressure emissions from a battery cell to be effectively lowered, thereby improving safety performance of a battery.

In one implementation manner, the thermal management component further includes: an avoidance structure configured to provide a space allowing the pressure relief mechanism to be actuated, where the thermal management component is attached to the plurality of battery cells to form an avoidance chamber between the avoidance structure and the pressure relief mechanism.

According to this solution, setting of an avoidance structure can ensure that a pressure relief mechanism can be effectively actuated. In addition, an avoidance chamber can provide a buffer space for discharge of emissions of a battery cell, thereby reducing impact pressure of the emissions of the battery cell to the outside, and further improving safety performance of a battery.

In one implementation manner, the thermal management component further includes: an avoidance structure configured to provide a space allowing the pressure relief mechanism to be actuated, where the avoidance structure is a through hole penetrating the thermal management component.

According to this solution, this arrangement achieves the object of passing emissions through a thermal management component in a simple manner and at a low cost.

In one implementation manner, the battery further includes: a collection chamber configured to collect the emissions from the battery cell and the thermal management component when the pressure relief mechanism is actuated, where the avoidance chamber and the collection chamber are isolated by the thermal management component.

According to this solution, a collection chamber can provide a further buffer for the discharge of emissions, so as to further reduce impact pressure of the emissions. In addition, the collection chamber can further reduce the risk of secondary damage brought by the emissions to the outside.

In one implementation manner, the battery further includes: a collection chamber configured to collect the emissions from the battery cell and the thermal management component when the pressure relief mechanism is actuated, where the avoidance structure and the collection chamber are in communication with each other.

According to this solution, emissions can smoothly enter a collection chamber, so as to reduce the risk of the emissions to the outside and reduce the pollution to the external environment. In addition, the collection chamber can provide a further buffer for the discharge of the emissions to further reduce impact pressure of the emissions.

In one implementation manner, the battery further includes a protective member, where the protective member is arranged on a side of the thermal management component away from the battery cell, and the collection chamber is arranged between the heat management component and the protective member.

According to this solution, a protective member can provide additional protection to a battery to prevent the battery from being damaged by foreign objects and prevent external dust or debris from entering the battery. In addition, the protective member and the thermal management component also form a collection chamber to provide further buffer for the discharge of emissions when a pressure relief mechanism is actuated, so as to reduce impact pressure of the emissions.

In one implementation manner, the battery further includes a sealing member arranged between the thermal management component and the protective member to seal the collection chamber.

According to this solution, arrangement of a sealing member can effectively prevent accidental discharge of emissions in a collection chamber, thereby improving safety performance of a battery.

According to a second aspect of the present application, there is provided an apparatus including the battery according to any one of the above solutions, the battery being configured to provide electric energy.

According to a third aspect of the present application, there is provided a method for producing a battery, including:
providing a plurality of battery cells configured to be electrically connected to each other through a bus component;
providing a cover body including an accommodation space configured to install the bus component;
providing an insulating part attached to the cover body and provided to cover at least the bus component;
providing a battery management unit comprising a control module and an electrical connection component, and the control module and the bus component are connected by the electrical connection component, the electrical connection component is embedded in the cover body; and
providing a case shell, the case shell and the cover body collectively enclose and form a case configured to accommodate the plurality of battery cells, and the control module is provided outside the case.

According to a fourth aspect of the present application, there is provided a device for producing a battery, including:
a battery cell production module configured to produce a plurality of battery cells configured to be electrically connected to each other through a bus component;
a cover body production module configured to produce a cover body including an accommodation space configured to install the bus component; and
an insulating part production module configured to produce an insulating part attached to the cover body and provided to cover at least the bus component;
a battery management unit production module configured to produce a battery management unit comprising a control module and an electrical connection component, and the control module and the bus component are connected by the electrical connection component, the electrical connection component is embedded in the cover body; and
a case shell production module configured to produce a case shell, the case shell and the cover body collectively enclose and form a case configured to accommodate the plurality of battery cells, and the control module is provided outside the case.

A battery and related apparatus, production method, and production device therefor according to embodiments of the present application enable a bus component configured to electrically connect a plurality of battery cells in a battery to be embedded on a cover body. This arrangement makes the structure of the battery more compact, and can increase volume energy density of the battery. And since the bus component is not sealed in a case, part of the structure of a battery management unit may be arranged outside the case of the battery, which can further save space and reduce the size of the battery, and facilitate maintenance and replacement of the battery management unit.

### BRIEF DESCRIPTION OF THE DRAWINGS

The accompanying drawings described herein are used to provide further understanding of the present application and constitute part of the present application, and the exemplary embodiments of the present application and the description thereof are used to illustrate the present application and do not constitute an undue limitation to the present application. In the drawings:
FIG. 1 shows a schematic structural diagram of some embodiments of a vehicle using a battery of the present application;
FIG. 2 shows an exploded view of a battery according to some embodiments of the present application;
FIG. 3 shows an exploded view of a battery according to some embodiments of the present application;
FIG. 4 shows a side sectional view of a battery according to some embodiments of the present application;
FIG. 5 shows an enlarged view of a part A of the battery shown in FIG. 4;
FIG. 6 shows an enlarged view of a part B of the battery shown in FIG. 4;
FIG. 7 shows a three-dimensional schematic diagram of a battery cell according to some embodiments of the present application;
FIG. 8 shows a three-dimensional schematic diagram of a battery cell according to some embodiments of the present application;
FIG. 9 shows a top view of a thermal management component according to some embodiments of the present application;
FIG. 10 shows a bottom view of the thermal management component of the present application shown in FIG. 9;
FIG. 11 shows a sectional view of the thermal management component of the present application shown in FIG. 9 in a direction of A-A;
FIG. 12 shows a schematic flow chart of some embodiments of a method for producing a battery according to the present application; and
FIG. 13 shows a schematic structural diagram of some embodiments of a device for producing a battery in the present application.

### DESCRIPTION OF EMBODIMENTS

To make the objectives, technical solutions and advantages of the present application clearer, the technical solutions in embodiments of the present application will be clearly and completely described below with reference to the accompanying drawings for a plurality of embodiments according to the present application. It should be understood that, the described embodiments are merely some of, rather than all of, the embodiments of the present application. All the other embodiments obtained by those of ordinary skill in the art based on the embodiments described in the present application without any creative effort shall fall within the scope of protection of the present application.

Unless otherwise defined, all technical and scientific terms used in the present application have the same meanings as those commonly understood by those skilled in the technical art to which the present application belongs. The terms used in the specification of the present application are merely for the purpose of describing specific embodiments, but are not intended to limit the present application. The terms "comprising", "including", "having", "possessing", "containing", "involving" and the like in the specification, claims and the foregoing description of the accompanying drawings of the present application are open words. Therefore, a method or apparatus "comprising", "including" or "having" one or more steps or elements for example has one or more steps or elements, but is not limited to merely having the one or more elements. The terms "first", "second" and the like in the specification and the claims or the foregoing accompanying drawings of the present application are intended to distinguish between different objects, rather than to describe a specific order or primary-secondary relationship. In addition, the terms "first" and "second" are only intended for a purpose of description, and shall not be understood as an indication or implication of relative importance or implicit indication of the quantity of indicated technical features. Therefore, a feature limited by "first" or "second" may explicitly or implicitly include one or more features. In the description of the present application, unless otherwise provided, "a plurality of" means two or more than two.

In the description of the present application, it should be understood that orientations or positional relationships indicated by terms such as "center", "crosswise", "length", "width", "up", "down", "front", "rear", "left", "right", "vertical", "horizontal", "top", "bottom", "inside", "outside", "axial direction", "radial direction" and "circumferential direction" are orientations or positional relationships shown based on the drawings, and the terms are merely for convenience of describing the present application and for simplifying the description, rather than for indicating or implying that an apparatus or element referred to must have a specific orientation, and must be constructed and operated in a specific orientation, which thus may not be understood as a limitation to the present application.

In the description of the present application, it should be noted that, unless explicitly specified and defined otherwise, terms "installation", "interconnection", "connection" and "attachment" should be understood broadly, for example, they may either be a fixed connection, or a detachable connection, or an integrated connection; and they may either be a direct connection, or an indirect connection through an intermediary, and may be an connection between interiors of two elements. Those of ordinary skill in the art may understand specific meanings of the foregoing terms in the present application according to specific conditions.

The phrase "embodiments" referred to in the present application means that the specific features, structures, and characteristics described with reference to the embodiments may be included in at least one embodiment of the present application. The phrase at various locations in the specification does not necessarily refer to the same embodiment, or an independent or alternative embodiment exclusive of another embodiment. Those skilled in the art understand, in explicit and implicit manners, that the embodiments described in the present application may be combined with another embodiment.

As described above, it should be emphasized that the term "comprising/including", when used in this specification, is used to clearly specify the presence of stated features, integers, steps or components, but do not preclude the presence or addition of one or more other features, integers, steps, or components or groups of features, integers, steps or components. As used in the present application, the singular form "a", "an" and "the" include plural forms unless the context clearly dictates otherwise.

The terms "a" and "an" in this specification can mean one, but may have the same meaning as "at least one" or "one or more". The term "about" generally means plus or minus 10%, or more specifically plus or minus 5%, of the mentioned value. The term "or" used in the claims means "and/or" unless it is clearly stated that it only refers to an alternative solution.

The term "and/or" in the present application merely describes an association relationship between associated objects and indicates that here may be three relationships. For example, A and/or B may indicate the following three cases: only A exists, both A and B exist, and only B exists. In addition, the character "/" in the present application generally indicates that the associated previous and next objects are in the relationship of "or".

A battery mentioned in the art can be divided into a primary battery and a rechargeable battery according to whether it is rechargeable. The primary battery is also called a "disposable" battery and a galvanic battery, because after its power is exhausted, it cannot be recharged and can only be discarded. The rechargeable battery is also called a secondary battery, a second-level battery, or a storage battery. The rechargeable battery is different from the primary battery in manufacturing material and process, and has an advantage that it can be recycled multiple times after being charged, and output current load capacity of the rechargeable battery is higher than that of most primary batteries. At present, common types of rechargeable batteries are: a lead-acid battery, a nickel-metal hydride battery (Ni-MH battery) and a lithium-ion battery. The lithium-ion battery has advantages such as light weight, large capacity (1.5 to 2 times that of Ni-MH of the same weight), and no memory effect, and has a very low self-discharge rate, so even if its price is relatively high, it still gets widely used. At present, the lithium-ion battery is also widely used in battery electric vehicles and hybrid vehicles. The lithium-ion battery for this purpose has a relatively low capacity, but has a larger output and charging current, and a longer service life, but a higher cost.

A battery described in embodiments of the present application refers to a rechargeable battery. Hereinafter, a lithium-ion battery will be mainly used as an example to describe the embodiments disclosed in the present application. It should be understood that the embodiments disclosed in the present application are applicable to any other suitable type of rechargeable battery. The battery mentioned in the embodiments disclosed in the present application can be directly or indirectly applied to an appropriate apparatus to power the apparatus.

The battery mentioned in the embodiments disclosed in the present application refers to a single physical module that includes one or more battery cells to provide a predetermined voltage and capacity. A battery cell is a basic unit in a battery, and can be generally divided into a cylindrical battery cell, a prismatic battery cell and a pouch battery cell according to the way of packaging. The following will mainly focus on a prismatic battery cell. It should be understood that the embodiments described below are also applicable to a cylindrical battery cell or a pouch battery cell in certain aspects.

The battery cell includes a positive electrode sheet, a negative electrode sheet, an electrolytic solution and an isolation film. The operation of a lithium-ion battery cell mainly relies on movement of lithium ions between the positive electrode sheet and the negative electrode sheet. For example, the lithium-ion battery cell uses one embedded lithium compound as one electrode material. Currently, main common cathode materials used as a lithium-ion battery are: lithium cobalt oxide (LiCoO₂), lithium manganese oxide (LiMn₂O₄), lithium nickel oxide (LiNiO₂) and lithium iron phosphate (LiFePO₄). The isolation film is disposed between the positive electrode sheet and the negative electrode sheet to form a thin film structure with three layers of materials. The thin film structure is generally made into an electrode assembly with a desired shape by winding or stacking. For example, a thin film structure of three layers of materials in a cylindrical battery cell is wound into an electrode assembly in a cylindrical shape, while in a prismatic battery cell the thin film structure is wound or stacked into an electrode assembly in a substantially cuboid shape.

In a typical battery cell structure, a battery cell includes a box, an electrode assembly and an electrolytic solution. The electrode assembly is accommodated in the box of the battery cell, and the electrode assembly includes a positive electrode sheet, a negative electrode sheet and an isolation film. The material of the isolation film may be PP or PE, etc. The electrode assembly may be a coiled structure or a laminated structure. The box includes a housing and a cover plate. The housing includes an accommodation chamber formed by a plurality of walls and an opening. The cover plate is arranged at the opening to close the accommodation chamber. In addition to the electrode assembly, the accommodation chamber also accommodates the electrolytic solution. The positive electrode sheet and the negative electrode sheet in the electrode assembly include electrode tabs. Specifically, the positive electrode sheet includes a positive electrode current collector and a positive electrode active material layer. The positive electrode active material layer is coated on a surface of the positive electrode current collector, and the positive electrode current collector not coated with the positive electrode active material layer protrudes from the positive electrode current collector coated with the positive electrode active material layer and serves as a positive electrode tab. A material of the positive electrode current collector may be aluminum, and the positive electrode active material may be lithium cobalt oxides, lithium iron phosphate, ternary lithium or lithium manganate, etc. The negative electrode sheet includes a negative electrode current collector and a negative electrode active material layer. The negative electrode active material layer is coated on a surface of the negative electrode current collector, and the negative electrode current collector not coated with the negative electrode active material layer protrudes from the negative electrode current collector coated with the negative electrode active material layer and serves as a negative electrode tab. The material of the negative electrode current collector may be copper, and the negative electrode active material may be carbon or silicon, etc. In order to ensure that no fusing occurs when a large current passes, there are a plurality of positive electrode tabs which are stacked together, and there are a plurality of negative electrode tabs which are stacked together. The electrode tabs are electrically connected with a positive electrode terminal and a negative electrode terminal located outside the battery cell through a connecting member. For a prismatic battery cell, the electrode terminal is generally provided on a portion of a cover plate. A plurality of battery cells are connected in series and/or in parallel via electrode terminals for various applications.

In some high-power applications such as electric vehicles, application of a battery includes three levels: a battery cell, a battery module, and a battery pack. The battery module is formed by electrically connecting a certain number of battery cells together and putting them in a frame in order to protect the battery cells from external impact, heat, vibration, etc. The battery pack is the final state of a battery system installed in an electric automobile. The battery pack generally includes a case configured to package one or more battery cells. The case can prevent liquid or other foreign objects from affecting the charging or discharging of battery cells. The case is generally composed of a cover body and a case shell. Most of current battery packs are made by assembling various control and protection systems such as a battery management system (BMS) and a thermal management component on one or more battery modules. With the development of technology, the level of battery module can be omitted, that is, a battery pack can be directly formed from battery cells. This improvement allows the battery system to significantly reduce the number of components while increasing weight energy density and volume energy density. The battery mentioned in the present application includes a battery module or a battery pack.

Generally, in addition to battery cells, a battery also includes a cover body, an insulating part, and a battery management unit. A bus component configured to electrically connect the battery cells is usually arranged between the cover body and the battery cells. This arrangement makes the overall volume of the battery larger. Moreover, the bus component is usually enclosed in the case, and thus the battery management unit electrically connected with the bus component also needs to be installed in the case of the battery (the cover body is, for example, a portion of the case), so that the volume of the case of the battery is large, and the battery management unit is sealed in the case, which is not convenient for subsequent maintenance and replacement.

For researchers and those skilled in the art, to change the design concept of the bus component installed between the cover body and the battery cells, it is necessary to solve various technical problems and overcome technical prejudices, and it is not achieved overnight.

In order to solve this problem, it is easy for many researchers to think of increasing the degree of detachability of the case, so as to facilitate subsequent opening of the case to maintain the battery management unit to solve this technical problem. That is, due to technical prejudice caused by the existence of the above-mentioned various problems or other various problems, those skilled in the art will not easily think of embedding the bus component in the cover body to solve this problem. This is also because such a modification of the design is too risky and too difficult, and this risk and difficulty hinder researchers from changing the installation method of the bus component.

In order to solve or at least partially solve the above-mentioned problems and other potential problems of the battery in the prior art, the inventor of the present application goes the other way and proposes a novel battery after conducting a lot of research and experiments. Applicable apparatuses for the battery described in the embodiments of the present application include, but are not limited to: mobile phones, portable devices, notebook computers, electromobiles, electric vehicles, ships, spacecrafts, electronic toys, electric tools, and the like. For example, the spacecrafts include airplanes, rockets, space shuttles, spaceships, and the like; the electronic toys include fixed or mobile electronic toys, such as game consoles, electric car toys, electric ship toys, electric aircraft toys, and the like; and the electric tools include electric metal cutting tools, electric grinding tools, electric assembling tools and electric railway tools, such as electric drills, electric grinders, electric spanners, electric screwdrivers, electric hammers, electric impact drills, concrete vibrators, and electric planers.

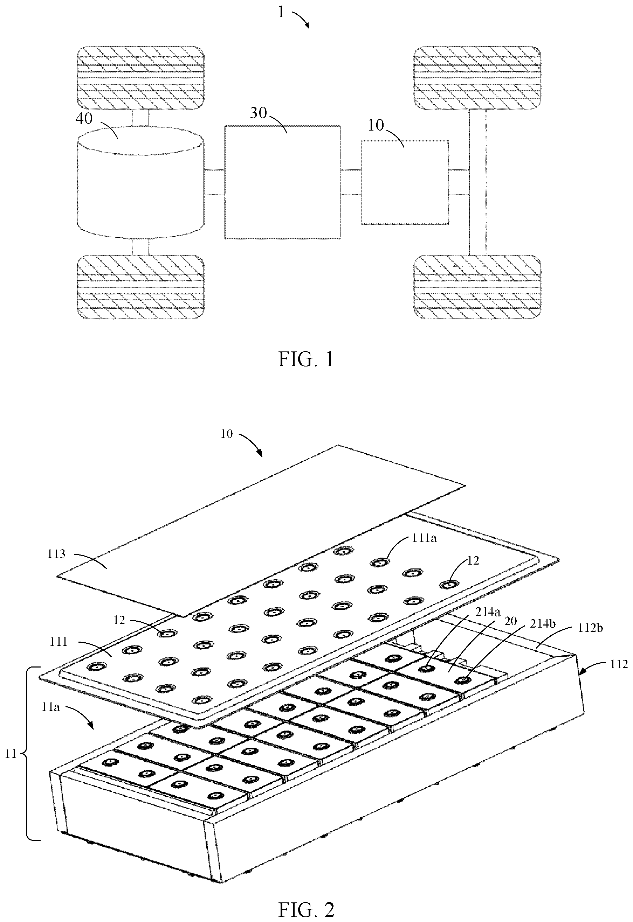

For example, as shown in FIG. 1, the figure is a simplified schematic diagram of a vehicle 1 according to an embodiment of the present application. The vehicle 1 may be a fuel-powered vehicle, a gas-powered vehicle or a new-energy vehicle. The new-energy vehicle may be a battery electric vehicle, a hybrid vehicle or an extended-range vehicle, or the like. A battery 10 may be provided inside the vehicle 1, for example, the battery 10 may be provided at the bottom, head or tail of the vehicle 1. The battery 10 may be used for power supply to the vehicle 1. For example, the battery 10 may serve as an operation power supply of the vehicle 1. In addition, the vehicle 1 may further include a controller 30 and a motor 40. The controller 30 is configured to control the battery 10 to supply power to the motor 40, for example, for a working power demand of the vehicle 1 during startup, navigation, and running. In another embodiment of the present application, the battery 10 can be serve not only as an operation power supply of the vehicle 1, but also as a driving power supply of the vehicle 1, replacing or partially replacing fuel or natural gas to provide driving power for the vehicle 1.

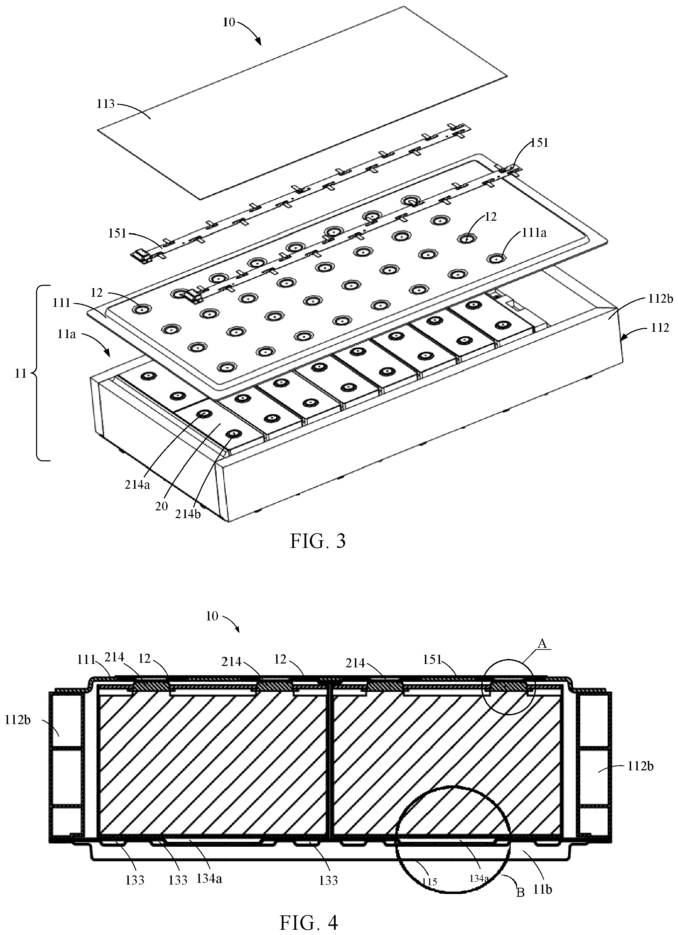

FIGS. 2 and 3 respectively show exploded views of a battery according to embodiments of the present application, respectively. As shown in FIGS. 2 and 3, the battery 10 includes a plurality of battery cells 20 and a bus component 12 configured to electrically connect the plurality of battery cells 20. In order to protect the battery cells 20 from invasion or corrosion of external liquid or foreign objects, the battery 10 includes a case 11 for packaging the plurality of battery cells and other necessary components, as shown in FIGS. 2 and 3. In some embodiments, the case 11 may include a cover body 111 and a case shell 112. The cover body 111 and the case shell 112 are combined together in a sealing manner to collectively enclose and form an electrical chamber configured to accommodate the plurality of battery cells 20.

The bus component 12 may also be embedded in the cover body 111, and FIGS. 2 to 5 show schematic diagrams of the bus component 12 embedded in the cover body 111. As shown in the figures, the cover body 111 may include an accommodation space 111a, and the accommodation space 111a is capable of accommodating the bus component 12. In some embodiments, the accommodation space 111a may be a through hole formed on the cover body 111. The bus component 12 may be fixed in the through hole in an appropriate manner. For example, the bus component 12 may be loaded into a mold before the cover body 111 is molded, so that the bus component 12 can be embedded in the cover body 111 after the cover body 111 is formed.

It should be understood that the bus component 12 is arranged at a position of the cover body 111 that is corresponding to an electrode terminal 214 (including a positive electrode terminal 214a and a negative electrode terminal 214b) of the battery cells 20. After the battery cells 20 in the case 111 are put in place, the cover body 111 may be directly assembled to the case shell 112, and then the bus component 12 is electrically connected with the electrode terminal 214 of the battery cells 20 in a fixing manner such as welding, such as laser welding or ultrasonic welding. Then, an insulating part 113 attached to the cover body 111 is used to cover at least the bus component 12, thereby forming the packaged case 11.

In some embodiments, the insulating part 113 may be a sheet or thin plate-shaped structure, and the material of the insulating part 113 may be PP, PE or PET, etc.; in some other embodiments, the insulating part 113 may also be insulating glue or insulating paint, etc.

In some embodiments, the insulating part 113 may be applied or assembled to the cover body 111. For example, after the bus component 12 is electrically connected to the electrode terminal 214 of the battery cells 20, the insulating part 113 may be formed by coating an insulating layer on a position of the cover body 111 having the bus component 12. In some alternative embodiments, the insulating part 113 may also be a component that is assembled to the cover body 111 to cover at least the insulating part 113. The insulating part 113 and the cover body 111 may be assembled in a sealing manner to ensure the sealing of the case 11. In some embodiments, the coated insulating layer or the assembled insulating part 113 may also cover the entire outer surface of the cover body 111.

In some embodiments, the insulating part 113 may also be integrally formed with the cover body 111. For example, the insulating part 113 may be formed as a portion of the cover body 111 protruding from the outer surface, and an accommodation space 111a is formed inside the portion to accommodate the bus component 12. In these embodiments, the bus component 12 may also be embedded in the cover body 111 by means such as molding or later assembled into the cover body 111 after the cover body 111 is formed. In the latter case mentioned, the bus component 12 may be electrically connected to the electrode terminal 214 of the battery cells 20 by means of resistance welding or the like.

According to the arrangement of embedding the bus component 12 into the cover body 111 described in the above embodiment, it is possible to greatly reduce the volume of the battery 10 without affecting safety of the battery 10 or even improving the safety of the battery, thereby improving volume energy density of the battery 10. In addition, this manner can also reduce the difficulty of assembling the battery 10, thereby reducing assembly costs. In addition, embedding the bus component 12 into the cover body 111 can also realize that the battery management unit mentioned above is at least partially arranged outside an electrical chamber 11a.

Specifically, for a conventional battery, components in the electrical chamber 11a all need to be properly connected before the cover body 111 and the case shell 112 are sealed. The connection includes connection between the bus component 12 and the electrode terminal 214 and connection between the battery management unit and the bus component 12. That is, in the conventional battery, the battery management unit is packaged in the sealed case 11. However, the battery management unit is a vulnerable component compared to other components. After the battery management unit is damaged or malfunctions, the sealed case 11 needs to be opened for replacement. The operation is time-consuming and laborious, and the sealing of the case 11 is also affected.

Unlike the conventional battery, in the case where the bus component 12 is embedded in the cover body 111, the battery management unit is at least partially arranged outside the electrical chamber 11a. At least one of electrical connection component 151 between a control module (not shown) of the battery management unit and the bus component 12 also be embedded in the cover body 111, as shown in FIG. 3. The control module may be accommodated in an accommodation portion integrally formed with the cover body 111. In this case, after the control module or the electrical connection component 151 of the battery management unit malfunctions, maintenance can be carried out without opening the case 11, which reduces maintenance costs while ensuring sealing of the case 11 is not affected, and furthermore, improves battery safety performance and user experience. In some embodiments, the electrical connection component 151 may include, but is not limited to, at least one of the following: a circuit board (such as a printed circuit board or a flexible circuit board), a cable, a wire, a conducting strip or a conducting bar. The electrical connection component 151 is configured to be electrically connected with the plurality of battery cells 20 to capture temperature or voltage signals of the plurality of battery cells 20.

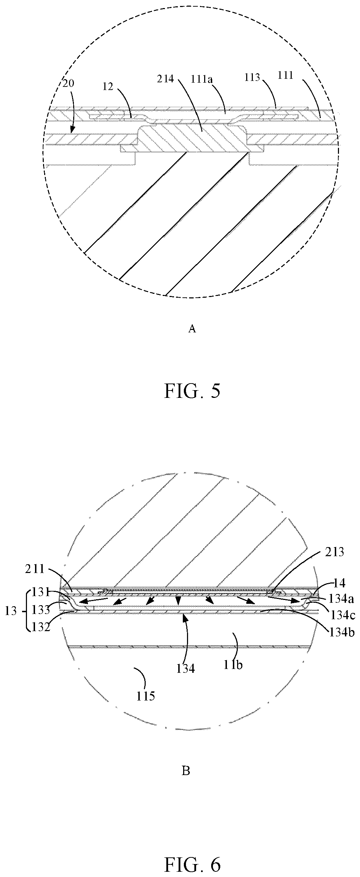

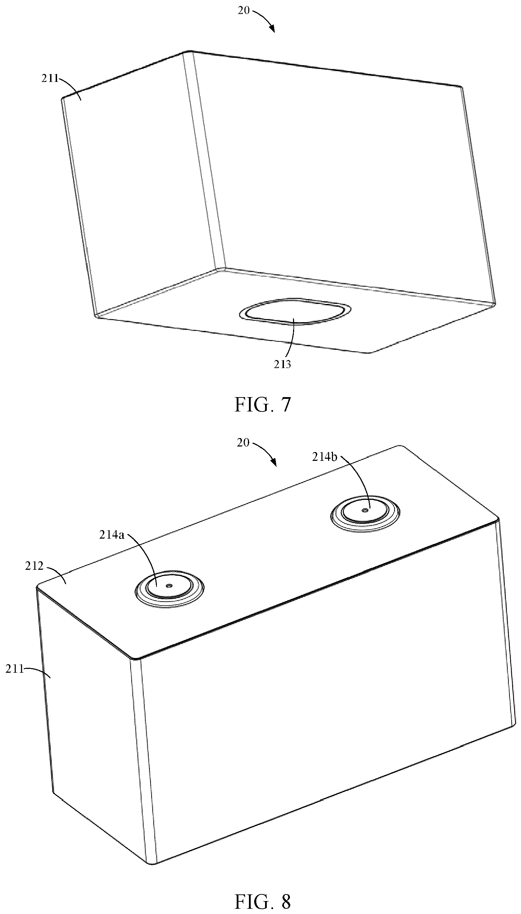

FIG. 6 shows a partial enlarged view of a part B in FIG. 4. As can be seen from FIG. 6, a thermal management component 13 is provided under a battery cell 20, and there are two chambers under the battery cell 20-a collection chamber 11b and an avoidance chamber 134a. The avoidance chamber 134a provides a space for the actuation of a pressure relief mechanism 213 of the battery cell. The collection chamber 11b is configured to collect emissions, and may be sealed or unsealed. In some embodiments, the collection chamber 11b may contain air or another gas. Optionally, the collection chamber 11b may also contain liquid, such as a cooling medium, or a component configured to accommodate the liquid may be provided to further lower the temperature of the emissions entering the collection chamber 11b. Further, optionally, the gas or the liquid in the collection chamber 11b flows in a circulating manner. In order to understand functions and structures of the thermal management component 13 and the double-chamber structure, it is first necessary to describe the structure of the battery cell 20 with reference to FIGS. 7 and 8.

FIGS. 7 and 8 show three-dimensional views of a battery cell 20 observed from different angles, respectively. As shown in the figures, in the battery cell 20 according to the present application, an electrode assembly is accommodated in a box of the battery cell 20. The box includes a housing 211 and a cover plate 212. The housing 211 includes an accommodation chamber formed by a plurality of walls and an opening. The cover plate 212 is arranged at the opening to close the accommodation chamber. In addition to the electrode assembly, the accommodation chamber also accommodates an electrolytic solution. A positive electrode sheet and a negative electrode sheet in the electrode assembly are generally provided with electrode tabs. The electrode tabs generally include a positive electrode tab and a negative electrode tab. The electrode tab is electrically connected to an electrode terminal 214 located outside the battery cell 20 through a connecting member. The electrode terminal 214 generally includes a positive electrode terminal 214a and a negative electrode terminal 214b. At least one battery cell 20 of the battery cells 20 in the battery 10 of the present application includes a pressure relief mechanism 213. In some embodiments, a pressure relief mechanism 213 may be provided on a battery cell 20 of the plurality of battery cells 20 that may be more likely to suffer thermal runaway due to a position of the battery cell 20 in the battery 10. Certainly, it is also possible that each battery cell 20 in the battery 10 is provided with a pressure relief mechanism 213.

The pressure relief mechanism 213 refers to an element or component that is actuated when an internal pressure or temperature of the battery cell 20 reaches a predetermined threshold, to relieve the internal pressure and/or internal substance. The threshold referred to in the present application may be a pressure threshold or a temperature threshold. The threshold design is different according to different design requirements. For example, the threshold may be designed or determined according to an internal pressure or internal temperature value of the battery cell 20 that is considered to have danger and a risk of being out of control. In addition, the threshold may depend on the material of one or more of the positive electrode sheet, the negative electrode sheet, the electrolytic solution and the isolation film in the battery cell 20. That is, the pressure relief mechanism 213 is configured to be actuated when the internal pressure or temperature of the at least one battery cell 20 in which it is located reaches a threshold, to relieve the pressure inside the battery, thereby avoiding more dangerous accidents. As mentioned above, the pressure relief mechanism 213 may also be called an anti-explosion valve, an air valve, a pressure relief valve or a safety valve, etc., and may specifically adopt a pressure-sensitive or temperature-sensitive element or structure. That is, when the internal pressure or temperature of the battery cell 20 reaches a predetermined threshold, the pressure relief mechanism 213 executes an action or a weakened structure provided in the pressure relief mechanism is damaged, so as to form an opening or channel for relieving the internal pressure. The bus component 12 is also called a bus bar or a bus, etc., which is a component that electrically connects the plurality of battery cells 20 in series and/or in parallel. The plurality of battery cells 20 have a higher voltage after being connected in series and/or parallel by the bus component 12. Therefore, a side having the bus component 12 is sometimes referred to as a high-voltage side.

The "actuation" mentioned in the present application means that the pressure relief mechanism 213 acts or is activated to a certain state, such that the internal pressure of the battery cell 20 can be relieved. The action generated by the pressure relief mechanism 213 may include but is not limited to: at least a portion of the pressure relief mechanism 213 being fractured, broken, torn or opened, etc. When the pressure relief mechanism 213 is actuated, high-temperature and high-pressure substances inside the battery cell 20 are discharged outwards from an actuated position as emissions. In this way, the pressure in the battery cell 20 can be relieved at a controllable pressure or temperature, thereby avoiding potentially, more serious accidents. The emissions from the battery cell 20 mentioned in the present application include but are not limited to: an electrolytic solution, dissolved or split positive and negative electrode sheets, fragments of an isolation film, high-temperature and high-pressure gas generated by reaction, flame, etc. The high-temperature and high-pressure emissions are discharged toward a direction in which the pressure relief mechanism 213 of the battery cell 20 is provided, and more specifically, may be discharged toward a direction of a region in which the pressure relief mechanism 213 is actuated. The strength and destructive power of such emissions may be huge, or may even be large enough to break through one or more structures such as the cover body 111 provided in this direction.

Unlike a conventional battery, the pressure relief mechanism 213 and the bus component 12 in the battery 10 according to the embodiments of the present application are respectively arranged on different sides of the battery cell 20. That is, generally, the bus component 12 is arranged on a top side where the cover plate 212 is located, and the pressure relief mechanism 213 of the battery cell 20 according to the embodiments of the present application may be arranged on any appropriate side different from the top side. For example, FIGS. 7 and 8 show that the pressure relief mechanism 213 is arranged on a side opposite to the bus component 12. In fact, the pressure relief mechanism 213 may be arranged on any one or more walls of the housing 211 of the battery cell 20, which will be further explained below.

On the one hand, for example, when the battery 10 is applied to an electric vehicle or the like, the high-voltage side where the bus component 12 is provided is generally arranged on a side adjacent to a driver's cabin due to wiring, etc., and the pressure relief mechanism 213 is arranged on a different side so that when the pressure relief mechanism 213 is actuated, the emissions from the battery cell 20 are discharged in a direction away from the bus component 12, as shown by arrows in the avoidance chamber 134a shown in FIG. 6, and the emissions are discharged in a substantially fan direction toward the direction away from the bus component 12. In this way, a hazard endangering safety of occupants when emissions are discharged toward a driver's cabin is eliminated, thereby significantly improving a use safety factor of the battery 10.

On the other hand, since the emissions include various conductive liquid or solid, arranging the bus component 12 and the pressure relief mechanism 213 on the same side has a great risk in that the emissions may directly conduct high-voltage positive and negative electrodes and cause a short circuit. A series of chain reactions caused by the short circuit may cause thermal runaway or explosion of all battery cells 20 in the battery 10. By arranging the bus component 12 and the pressure relief mechanism 213 on different sides so that the emissions are discharged in the direction away from the bus component 12, the above-mentioned problems can be avoided, thereby further improving safety performance of the battery 10.

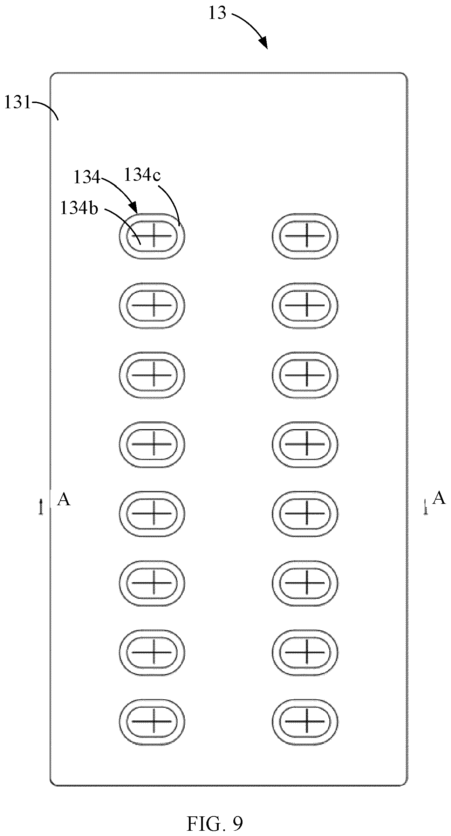

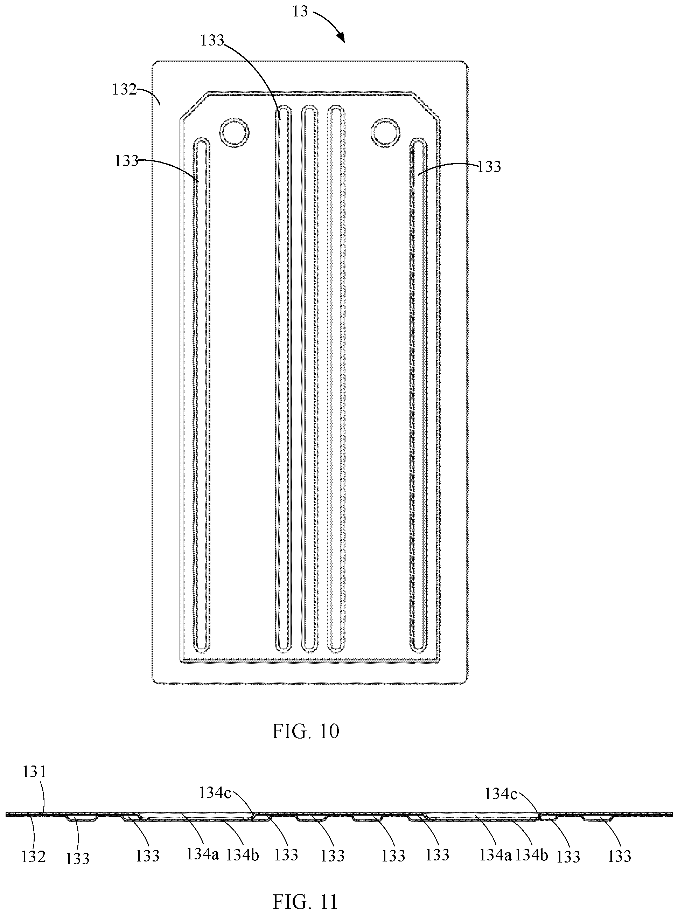

FIGS. 9 to 11 show views at different angles and a sectional view of a thermal management component 13 according to some embodiments. The thermal management component 13 will be described below in conjunction with FIGS. 9 to 11.

The thermal management component 13 in the present application refers to a component that can manage and adjust the temperature of the battery cells 20. The thermal management component 13 can accommodate a fluid to manage and adjust the temperature of the battery cells 20. The fluid here may be liquid or gas. The management and adjustment of the temperature may include heating or cooling the plurality of battery cells 20. For example, in the case of cooling or lowering the temperature of the battery cells 20, the thermal management component 13 is configured to accommodate a cooling fluid to lower the temperature of the plurality of battery cells 20. In this case, the thermal management component 13 may also be called a cooling component, a cooling system or a cooling plate, etc. The fluid accommodated in it may also be called a cooling medium or a cooling fluid, and more specifically, may be called a cooling liquid or a cooling gas. The cooling medium may be designed to flow in a circulating manner to achieve a better temperature adjustment effect. The cooling medium may specifically use water, a mixture of water and ethylene glycol, or air, etc. In order to achieve the effectiveness of cooling, the thermal management component 13 is generally attached to the battery cells 20 by means of thermally conductive silica gel for example. In addition, the thermal management component 13 may also be used for heating to raise the temperature of the plurality of battery cells 20. For example, heating the battery 10 before starting an electric vehicle in some regions with colder temperature in winter can improve battery performance.

In some embodiments, the thermal management component 13 may include a pair of thermally conductive plates and a flow channel 133 formed between the pair of thermally conductive plates. For the convenience of the description below, the pair of thermally conductive plates will be referred to as a first thermally conductive plate 131 attached to the plurality of battery cells 20 and a second thermally conductive plate 132 arranged on a side of the first thermally conductive plate 131 away from the battery cell 20. The flow channel 133 is configured to accommodate a fluid and allow the fluid to flow therein. In some embodiments, the thermal management component 13 including the first thermally conductive plate 131, the second thermally conductive plate 132 and the flow channel 133 may be integrally formed by an appropriate process such as blow molding, or the first thermally conductive plate 131 and the second thermally conductive plate 132 are assembled together by welding (such as brazing). In some alternative embodiments, the first thermally conductive plate 131, the second thermally conductive plate 132 and the flow channel 133 may also be formed separately and assembled together to form the thermal management component 13.

In some embodiments, the thermal management component 13 may constitute a portion of the case 11 configured to accommodate the plurality of battery cells. For example, the thermal management component 13 may be a bottom portion (not shown in the figures) of the case shell 112 of the case 11. In addition to the bottom portion, the case shell 112 also includes side portions 112b. In some embodiments, the side portions 112b are formed as a frame structure, and can be assembled together with the thermal management component 13 to form the case shell 112. In this way, the structure of the battery 10 can be made more compact, effective utilization of space can be improved, and energy density can be improved.

The thermal management component 13 and the side portions 112b may be assembled together by a sealing member such as a sealing ring and a fastener in a sealing manner. In order to improve the sealing effect, the fastener may use a flow drill screw (FDS). Certainly, it should be understood that this sealing assembly manner is only illustrative, and is not intended to limit the protection scope of the content of the present application. Any other suitable assembly manner is also possible. For example, in some alternative embodiments, the thermal management component 13 and the side portions 112b may be assembled together in an appropriate manner such as bonding.

In some alternative embodiments, the thermal management component 13 and the side portions 112b may also be integrally formed. That is, the case shell 112 of the case 11 may be integrally formed. This forming manner can increase the strength of the case shell 112 and is less prone to leakage. In some alternative embodiments, the side portions 112b of the case shell 112 may also be integrally formed with the cover body 111. That is, in this case, the cover body 111 constitutes a structure with a lower opening, and the lower opening can be closed by the thermal management component 13.

In other words, the thermal management component 13 and the case 11 may have various relationships. For example, in some alternative embodiments, the thermal management component 13 may not be a portion of the case shell 112 of the case 11, but a component assembled on a side of the case shell 112 facing the cover body 111. This manner is more conducive to keeping the case 11 closed. In some other alternative embodiments, the thermal management component 13 may also be integrated on an inner side of the case shell 112 in a suitable manner.

As mentioned above, some pressure relief mechanism 213 needs to be provided with an avoidance structure 134 at a position outside the battery cell 20 corresponding to the pressure relief mechanism 213 when actuated, so that the pressure relief mechanism 213 can be smoothly actuated to perform its intended function. In some embodiments, the avoidance structure 134 may be arranged on the thermal management component 13, so that when the thermal management component 13 is attached to the plurality of battery cells 20, an avoidance chamber 134a can be formed between the avoidance structure 134 and the pressure relief mechanism 213. That is, the avoidance chamber 134a mentioned in the present application refers to a closed hollow chamber formed by collective surrounding of the avoidance structure 134 and the pressure relief mechanism 213. In this solution, for the discharge of the emissions from the battery cell 20, an inlet side surface of the avoidance chamber 134a may be opened due to actuation of the pressure relief mechanism 213, and an outlet side surface opposite to the inlet side surface may be partially damaged and opened due to high-temperature and high-pressure emissions, thereby forming a relief channel for the emissions. According to some other embodiments, the avoidance chamber 134a may be, for example, a non-closed hollow chamber formed by collective surrounding of the avoidance structure 134 and the pressure relief mechanism 213. An outlet side surface of the non-closed hollow chamber may originally have a channel for the emissions to flow out.

With continuing reference to FIGS. 9 to 11, as shown in the figures, in some embodiments, the first thermally conductive plate 131 and the second thermally conductive plate 132 may be respectively provided with a half-recess structure corresponding to the flow channel 133, and half-recess structures of the first thermally conductive plate 131 and the second thermally conductive plate 132 are aligned with each other. By assembling the first thermally conductive plate 131 and the second thermally conductive plate 132 together, the half-recess structures of the first thermally conductive plate 131 and the second thermally conductive plate 132 are combined into the flow channel 133, and finally the thermal management component 13 is formed.

Certainly, it should be understood that the specific structure of the thermal management component 13 described above is only schematic and is not intended to limit the protection scope of the present application. Any other suitable structure or arrangement is also possible. For example, in some alternative embodiments, at least one of the first thermally conductive plate 131, the second thermally conductive plate 132 and the flow channel 133 may be omitted. For example, the second thermally conductive plate 132 may be omitted. That is, in some embodiments, the thermal management component 13 may only include the first thermally conductive plate 131 and the flow channel 133 arranged on one side or embedded therein.

As can be seen from the above description, in some embodiments, when the pressure relief mechanism 213 is arranged on a different side with respect to the bus component 12 of the battery cell 20, a double-chamber structure can be formed after structural adjustment. The double chambers refer to the avoidance chamber 134a between the pressure relief mechanism 213 of the battery cell 20 and the avoidance structure 134 and the collection chamber 11b mentioned above. The double-chamber structure can effectively ensure that the emissions from the battery cell 20 can be discharged in a controllable, orderly and timely manner when the pressure relief mechanism 213 is actuated. In addition, in some embodiments, the avoidance chamber 134a may also be damaged to allow the fluid in the thermal management component 13 to flow out for cooling and extinguishing the emissions from the battery cell 20, so that the temperature of the emissions from the battery cell 20 can be quickly lowered, thereby improving safety performance of the battery 10.

Hereinafter, referring to FIG. 6, it can be seen that, in some embodiments, the avoidance structure 134 formed on the thermal management component 13 may include an avoidance bottom wall 134b and an avoidance side wall 134c surrounding the avoidance chamber 134a. The avoidance bottom wall 134b and the avoidance side wall 134c in the present application are relative to the avoidance chamber 134a. Specifically, the avoidance bottom wall 134b refers to a wall of the avoidance chamber 134a opposite to the pressure relief mechanism 213, and the avoidance side wall 134c is a wall adjacent to and at a predetermined angle with respect to the avoidance bottom wall 134b to surround the avoidance chamber 134a. In some embodiments, the avoidance bottom wall 134b may be a portion of the second thermally conductive plate 132, and the avoidance side wall 134c may be a portion of the first thermally conductive plate 131.

For example, in some embodiments, the avoidance structure 134 may be formed by recessing a portion of the first thermally conductive plate 131 toward the second thermally conductive plate 132 and forming an opening, and fixing an edge of the opening and the second thermally conductive plate 132 together in a suitable fixing manner. When the pressure relief mechanism 213 is actuated, the emissions from the battery cell 20 will first enter the avoidance chamber 134a. As shown by arrows in the avoidance chamber 134a of FIG. 6, the emissions will be discharged outward in a substantially fan-shaped direction.

Unlike a conventional thermal management component, the thermal management component 13 according to the embodiment of the present application can be damaged when the pressure relief mechanism 213 is actuated, so that the emissions from the battery cell 20 can pass through the thermal management component 13. An advantage of this arrangement is that high-temperature and high-pressure emissions from the battery cell 20 can pass through the thermal management component 13 smoothly, so as to avoid secondary accidents caused by the emissions not being discharged in time, thereby improving safety performance of the battery 10.

In order to allow the emissions to pass through the thermal management component 13 smoothly, a through hole or a relief mechanism may be provided at a position of the thermal management component 13 opposite to the pressure relief mechanism 213. For example, in some embodiments, a relief mechanism may be provided on the avoidance bottom wall 134b, that is, on the second thermally conductive plate 132. The relief mechanism in the present application refers to a mechanism that can be actuated when the pressure relief mechanism 213 is actuated, to allow at least the emissions from the battery cell 20 to pass through the thermal management component 13 to be discharged. In some embodiments, the relief mechanism may also adopt the same structure as the pressure relief mechanism 213 on the battery cell 20. That is, in some embodiments, the relief mechanism may be a mechanism arranged on the second thermally conductive plate 132 and having the same structure as the pressure relief mechanism 213. In some alternative embodiments, the relief mechanism may also adopt a structure different from that of the pressure relief mechanism 213, and is only a weakened structure provided at the avoidance bottom wall 134b. The weakened structure may include, but is not limited to, for example: a thinned part integral with the avoidance bottom wall 134b, an indentation (for example, a cross-shaped indentation 134d as shown in FIG. 9), or a vulnerable part made of a vulnerable material such as plastic installed at the avoidance bottom wall 134b. Alternatively, the relief mechanism may be a temperature-sensitive or pressure-sensitive relief mechanism that is actuated when a temperature or pressure sensed by the relief mechanism exceeds a threshold.

In some embodiments, in order to allow the emissions to pass through the thermal management component 13 smoothly, the avoidance structure 134 may also be a through hole penetrating the thermal management component 13. That is, the avoidance structure 134 may only have the avoidance side wall 134c, and the avoidance side wall 134c is thus a hole wall of the through hole. In this case, when the pressure relief mechanism 213 is actuated, the emissions from the battery cell 20 can directly pass through the avoidance structure 134 to be discharged. In this way, formation of secondary high pressure can be avoided more effectively, thereby improving safety performance of the battery 10.

In some embodiments, the thermal management component 13 may also be configured to be damaged when the pressure relief mechanism 213 is actuated, to allow a fluid to flow out. The fluid outflow could quickly lower the temperature of the high-temperature and high-pressure emissions from the battery cell 20 and extinguish them, thereby avoiding further damage to other battery cells 20 and the battery 10 so as not to cause more serious accidents. For example, in some embodiments, the avoidance side wall 134c may also be formed to be easily damaged by the emissions from the battery cell 20. Since internal pressure of the battery cell 20 is relatively great, the emissions from the battery cell 20 will be discharged outward in a substantially conical shape. In this case, if a contact area between the avoidance side wall 134c and the emissions can be increased, possibility of damage to the avoidance side wall 134c can be increased.

For example, in some embodiments, the avoidance side wall 134c is configured to form a predetermined included angle relative to a direction of the pressure relief mechanism 213 toward the thermal management component 13, and the included angle is greater than or equal to 15° and less than or equal to 85°. For example, a predetermined included angle shown in FIG. 6 is about 45°. By properly setting the included angle, the avoidance side wall 134c can be more easily damaged when the pressure relief mechanism 213 is actuated, so as to further allow the fluid to flow out to contact the emissions, and achieve the effect of cooling the emissions in time. In addition, the predetermined included angle can also enable the avoidance side wall 134c to be formed more easily. For example, the predetermined included angle can provide a certain draft angle, thereby being conducive to the manufacture of the avoidance side wall 134c and even the entire first thermally conductive plate 131.

In addition, this arrangement manner of the avoidance side wall 134c can be applied to the above-mentioned case with the avoidance chamber 134a and the case where the avoidance structure 134 is a through hole. For example, in the case where the avoidance structure 134 is the through hole, an aperture of the through hole may gradually decrease along a direction of the pressure relief mechanism 213 toward the thermal management component 13, and an included angle formed by a hole wall of the through hole relative to the direction of the pressure relief mechanism 213 toward the thermal management component 13 is greater than or equal to 15° and less than or equal to 85°.

Certainly, it should be understood that the aforementioned configuration that the avoidance side wall 134c is at a predetermined included angle with respect to the direction of the pressure relief mechanism 213 toward the thermal management component 13 is only illustrative, and is not intended to limit the protection scope of the content of the present application. Any other suitable structure that can help the avoidance side wall 134c be damaged when the pressure relief mechanism 213 is actuated is feasible. For example, in some embodiments, any type of weakened structure may also be provided on the avoidance side wall 134c.

The above embodiment describes the case where the thermal management component 13 has the avoidance structure 134. That is, the avoidance chamber 134a mentioned in the above embodiment is formed by the avoidance structure 134 on the thermal management component 13 and the pressure relief mechanism 213. It should be understood that the above embodiments of the avoidance chamber 134a are only illustrative and are not intended to limit the scope of protection of the content of the present application, and any other appropriate structure or arrangement is also possible. For example, in some alternative embodiments, the thermal management component 13 may not include the avoidance structure 134. In this case, the avoidance chamber 134a may be formed from a protruding portion formed around the pressure relief mechanism 213 and the thermal management member 13, for example. In addition, a position of the thermal management component 13 opposite to the pressure relief mechanism 213 may be provided with a relief mechanism or a weakened structure, so that the emissions from the battery cell 20 can pass through the thermal management component 13 and/or break through the thermal management component 13 to allow the fluid to flow out.

Certainly, in some embodiments, the avoidance chamber 134a may not be used. For example, for some pressure relief mechanisms 213 that can be actuated without an avoidance space, the pressure relief mechanism 213 may be arranged in close contact with the thermal management component 13. Such pressure relief mechanism 213 may include, but is not limited to, a temperature-sensitive pressure relief mechanism 213, for example. The temperature-sensitive pressure relief mechanism 213 is a mechanism that is actuated when a temperature of the battery cell 20 reaches a threshold, to relieve internal pressure of the battery cell 20. Corresponding to this is a pressure-sensitive pressure relief mechanism 213. The pressure-sensitive pressure relief mechanism 213 is the pressure relief mechanism 213 mentioned above. The pressure-sensitive pressure relief mechanism is a mechanism that is actuated when an internal pressure of the battery cell 20 reaches a threshold, to relieve the internal pressure of the battery cell 20.

Hereinafter, the collection chamber 1 1b will be described in conjunction with FIG. 6 again. The collection chamber 11b in the present application refers to a hollow chamber that collects emissions from the battery cell 20 and the thermal management component 13 when the pressure relief mechanism 213 is actuated. In the case where the avoidance chamber 134a exists as described above, the avoidance chamber 134a can be isolated from the collection chamber 1 1b by the thermal management component 13. The so-called "isolation" here refers to separation, which may refer to unsealing. This situation can be more advantageous for the emissions to break through the avoidance side wall 134c to allow a fluid to flow out, so as to further lower the temperature of the emissions and extinguish them, thereby improving safety performance of the battery 10. In addition, in the case where the avoidance structure 134 described above is a through hole, the avoidance chamber 134a and the collection chamber 1 1b may be in communication with each other. This manner is more conducive to discharge of emissions, thereby avoiding safety hazards caused by secondary high pressure.

In some embodiments, the collection chamber 11b may also be an open cavity outside the thermal management component 13. For example, in an embodiment in which the thermal management component 13 serves as a bottom portion of the case shell 112 of the case 11, the emissions from the battery cell 20 may be directly discharged to an outer space of the thermal management component 13 after passing through the thermal management component 13, that is, the outside of the case 11, thereby avoiding generation of secondary high pressure. In some alternative embodiments, the battery 10 may further include a protective member 115. The protective member 115 in the present application refers to a component arranged on a side of the thermal management component 13 away from the battery cell 20 to provide protection for the thermal management component 13 and the battery cell 20. In these embodiments, the collection chamber 11b may be arranged between the protective member 115 and the thermal management component 13.

In some embodiments, the protective member 115 may be a portion installed at the bottom of the case 11 to play a protective role. This manner helps to promote more diversified design of an application position or space for the battery 10 of an apparatus such as an electric vehicle. For example, for some electric vehicles, in order to reduce manufacturing costs and further reduce the price of a final product, the protective member 115 may not be provided without affecting the usage. A user can choose whether to install a protective member according to needs. In this case, the collection chamber 11b constitutes an open cavity mentioned above, and the emissions from the battery cell 20 can be directly discharged to the outside of the battery 10.

In some embodiments, the protective member 115 may be a bottom portion of the case shell 112 of the case 11. For example, the heat management component 13 may be assembled to the protective member 115 that serves as the bottom portion of the case shell 112, and the heat management component 13 is assembled to the protective member 115 with a gap therebetween to form the collection chamber 11b. In this case, the collection chamber 11b can serve as a buffer chamber for the emissions from the battery cell 20. When at least one of the temperature, volume, or pressure of the emissions in the collection chamber 1 1b reaches a predetermined level or threshold, the protective member 115 may be partially damaged to relieve the pressure in the collection chamber 11b in time. In some alternative embodiments, alternatively or additionally, a sealing member (such as a sealing ring, a sealant, or the like) may be provided between the protective member 115 and the thermal management component 13 to seal the collection chamber 11b, where the sealing member may also be at least partially damaged when at least one of the temperature, volume, or pressure of the emissions in the collection chamber 11b reaches a predetermined level or threshold, to relieve the pressure in the collection chamber 11b in time to avoid secondary damage.

In some alternative embodiments, the protective member 115 may also be integrally formed with the thermal management component 13. For example, on the outside of the thermal management component 13, a protective member 115 is also integrally formed, and there is a space between the protective member 115 and the thermal management component 13 to form the collection chamber 11b. The protective member 15 may be provided with a weakened structure, so that when the temperature, volume or pressure of the emissions in the collection chamber 11b reaches a predetermined level or threshold, the protective member 115 can be partially damaged to relieve the pressure of the collection chamber 11b in time. This manner can further reduce the number of components, and therefore reduce assembly time and assembly costs.

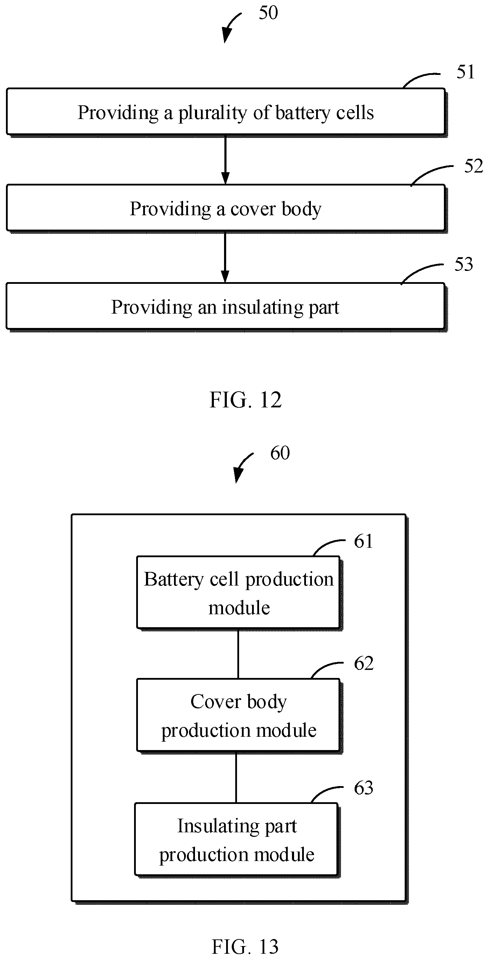

The battery of the embodiment of the present application is described above in conjunction with FIGS. 1 to 11, and a method and device for producing a battery of an embodiment of the present application will be described below in conjunction with FIGS. 12 and 13, and for parts that are not described in detail, reference can be made to the foregoing embodiments.

Referring to FIG. 12, in an embodiment given in the present application, there is further provided a method 50 for producing a battery, including the following steps: a step 51 of providing a plurality of battery cells configured to be electrically connected to each other through a bus component; a step 52 of providing a cover body including an accommodation space configured to install the bus component; and a step 53 of providing an insulating part attached to the cover body and provided to cover at least the bus component.

Referring to FIG. 13, in an embodiment given in the present application, there is further provided a device 60 for producing a battery, including: a battery cell production module 61 configured to produce a plurality of battery cells configured to be electrically connected to each other through a bus component; a cover body production module 62 configured to produce a cover body including an accommodation space configured to install the bus component; and an insulating part production module 63 configured to produce an insulating part attached to the cover body and provided to cover at least the bus component.

A battery and related apparatus, production method, and production device therefor according to embodiments of the present application enable a bus component configured to electrically connect a plurality of battery cells in a battery to be embedded on a cover body. This arrangement makes the structure of the battery more compact, and can increase volume energy density of the battery. And since the bus component is not sealed in a case, a portion of the structure of a battery management unit may be arranged outside the case of the battery, which can further save space and reduce the size of the battery, and facilitate maintenance and replacement of the battery management unit.

## Claims

1. A battery (10), comprising:
a plurality of battery cells (20) configured to be electrically connected to each other through a bus component (12);
a cover body (111) comprising an accommodation space (111a) configured to install the bus component (12);
an insulating part (113) attached to the cover body (111) and provided to cover at least the bus component (12);
a battery management unit comprising a control module and an electrical connection component, and the control module and the bus component (12) are connected by the electrical connection component, the electrical connection component is embedded in the cover body (111); and
a case shell (112), the case shell (112) and the cover body (111) collectively enclose and form a case (11) configured to accommodate the plurality of battery cells (20), and the control module is provided outside the case (11).

2. The battery according to claim 1, wherein the accommodation space (111a) is a through hole formed on the cover body (111), the bus component (12) passes through the through hole and is fixed on the cover body (111), and the insulating part (113) is applied or assembled to the cover body (111).

3. The battery according to claim 1, wherein the accommodation space (111a) is a blind hole formed on the cover body (111), the bus component (12) is capable of entering the accommodation space (111a) through an opening of the accommodation space (111a), and at least a portion of the bus component (12) is accommodated in the accommodation space (111a), and the insulating part (113) is integrally formed with the cover body (111).

4. The battery according to any one of claims 1-3, wherein the electrical connection component comprises a circuit board configured to be electrically connected with the plurality of battery cells (20) to capture temperature or voltage signals of the plurality of battery cells (20).

5. The battery according to any one of claims 1-4, wherein at least one battery cell (20) of the plurality of battery cells (20) comprises a pressure relief mechanism (213), and the pressure relief mechanism (213) is configured to be actuated when an internal pressure or temperature of the at least one battery cell (20) reaches a threshold, to relieve the internal pressure,
wherein the pressure relief mechanism (213) and the bus component (12) are respectively arranged on different sides of the at least one battery cell (20), so that when the pressure relief mechanism (213) is actuated, emissions from the at least one battery cell (20) are discharged in a direction away from the bus component (12).

6. The battery according to claim 5, further comprising: a thermal management component (13), wherein the thermal management component (13) is configured to accommodate a fluid to adjust a temperature of the battery cell (20), and the thermal management component (13) is configured to be damaged when the pressure relief mechanism (213) is actuated, so that the emissions from the battery cell (20) pass through the thermal management component (13).

7. The battery according to claim 6, wherein the thermal management component (13) is configured to be damaged when the pressure relief mechanism (213) is actuated, to allow the fluid to flow out.

8. The battery according to claim 6 or 7, wherein the thermal management component (13) further comprises:
an avoidance structure (134) configured to provide a space allowing the pressure relief mechanism (213) to be actuated, and
wherein the thermal management component (13) is attached to the plurality of battery cells (20) to form an avoidance chamber (134a) between the avoidance structure (134) and the pressure relief mechanism (213), or the avoidance structure (134) is a through hole penetrating the thermal management component (13).

9. The battery according to claim 8, further comprising:
a collection chamber (11b) configured to collect the emissions from the battery cell (20) and the thermal management component (13) when the pressure relief mechanism (213) is actuated,
wherein the avoidance chamber (134a) and the collection chamber (11b) are isolated by the thermal management component (13), or the avoidance structure (134) and the collection chamber (11b) are in communication with each other.

10. An apparatus comprising the battery according to claims 1-9, the battery being configured to provide electric energy.

11. A method for producing a battery, comprising:
providing a plurality of battery cells (20) configured to be electrically connected to each other through a bus component (12);
providing a cover body (111) comprising an accommodation space (111a) configured to install the bus component (12);
providing an insulating part (113) attached to the cover body (111) and provided to cover at least the bus component (12);
providing a battery management unit comprising a control module and an electrical connection component, and the control module and the bus component (12) are connected by the electrical connection component, the electrical connection component is embedded in the cover body (111); and
providing a case shell (112), the case shell (112) and the cover body (111) collectively enclose and form a case (11) configured to accommodate the plurality of battery cells (20), and the control module is provided outside the case (11).

12. A device for producing a battery, comprising:
a battery cell production module configured to produce a plurality of battery cells (20) configured to be electrically connected to each other through a bus component (12);
a cover body production module configured to produce a cover body (111) comprising an accommodation space (111a) configured to install the bus component (12);
an insulating part production module configured to produce an insulating part (113) attached to the cover body (111) and provided to cover at least the bus component (12);
a battery management unit production module configured to produce a battery management unit comprising a control module and an electrical connection component, and the control module and the bus component (12) are connected by the electrical connection component, the electrical connection component is embedded in the cover body (111); and
a case shell production module configured to produce a case shell (112), the case shell (112) and the cover body (111) collectively enclose and form a case (11) configured to accommodate the plurality of battery cells (20), and the control module is provided outside the case (11).

## Patentansprüche

1. Batterie (10), umfassend:
eine Mehrzahl von Batteriezellen (20), die dazu ausgelegt sind, über eine Buskomponente (12) elektrisch miteinander verbunden zu sein;
einen Abdeckungskörper (111), umfassend einen Aufnahmeraum (111a), der dazu ausgelegt ist, die Buskomponente (12) zu installieren;
ein Isolierteil (113), das an dem Abdeckkörper (111) befestigt und zum Abdecken zumindest der Buskomponente (12) bereitgestellt ist;
eine Batteriemanagementeinheit, die ein Steuermodul und eine elektrische Verbindungskomponente umfasst, und das Steuermodul und die Buskomponente (12) durch die elektrische Verbindungskomponente verbunden sind, wobei die elektrische Verbindungskomponente in den Abdeckkörper (111) eingebettet ist; und
einen Gehäusemantel (112), wobei der Gehäusemantel (112) und der Abdeckkörper (111) gemeinsam ein Gehäuse (11) umschließen und bilden, das dazu ausgelegt ist, die Mehrzahl von Batteriezellen (20) aufzunehmen, und das Steuermodul außerhalb des Gehäuses (11) bereitgestellt ist.

2. Batterie nach Anspruch 1, wobei der Aufnahmeraum (11a) ein auf dem Abdeckkörper (111) ausgebildetes Durchgangsloch ist, die Buskomponente (12) durch das Durchgangsloch hindurchgeht und auf dem Abdeckkörper (111) fixiert ist, und das Isolierteil (113) auf den Abdeckkörper (111) angewandt oder montiert ist.

3. Batterie nach Anspruch 1, wobei der Aufnahmeraum (111a) ein am Abdeckkörper (111) ausgebildetes Sackloch ist, die Buskomponente (12) in der Lage ist, durch eine Öffnung des Aufnahmeraums (111a) in den Aufnahmeraum (111a) einzutreten, und zumindest ein Teil der Buskomponente (12) im Aufnahmeraum (111a) aufgenommen ist, und das Isolierteil (113) einstückig mit dem Abdeckkörper (111) ausgebildet ist.

4. Batterie nach einem der Ansprüche 1-3, wobei die elektrische Verbindungskomponente eine Leiterplatte umfasst, die dazu ausgelegt ist, mit der Mehrzahl von Batteriezellen (20) elektrisch verbunden zu werden, um Temperatur- oder Spannungssignale der Mehrzahl von Batteriezellen (20) zu erfassen.

5. Batterie nach einem der Ansprüche 1-4, wobei mindestens eine Batteriezelle (20) der Mehrzahl von Batteriezellen (20) einen Druckentlastungsmechanismus (213) umfasst, und der Druckentlastungsmechanismus (213) dazu ausgelegt ist, betätigt zu werden, wenn ein Innendruck oder eine Temperatur der mindestens einen Batteriezelle (20) einen Schwellenwert erreicht, um den Innendruck zu entlasten,
wobei der Druckentlastungsmechanismus (213) und die Buskomponente (12) jeweils auf verschiedenen Seiten der mindestens einen Batteriezelle (20) angeordnet sind, so dass, wenn der Druckentlastungsmechanismus (213) betätigt wird, Emissionen aus der mindestens einen Batteriezelle (20) in eine Richtung weg von der Buskomponente (12) abgeführt werden.

6. Batterie nach Anspruch 5, ferner umfassend: eine Wärmemanagementkomponente (13), wobei die Wärmemanagementkomponente (13) dazu ausgelegt ist, ein Fluid aufzunehmen, um eine Temperatur der Batteriezelle (20) anzupassen, und die Wärmemanagementkomponente (13) dazu ausgelegt ist, beschädigt zu werden, wenn der Druckentlastungsmechanismus (213) betätigt wird, so dass die Emissionen von der Batteriezelle (20) durch die Wärmemanagementkomponente (13) hindurchgehen.

7. Batterie nach Anspruch 6, wobei die Wärmemanagementkomponente (13) dazu ausgelegt ist, beschädigt zu werden, wenn der Druckentlastungsmechanismus (213) betätigt wird, um dem Fluid zu ermöglichen, abzufließen.

8. Batterie nach Anspruch 6 oder 7, wobei die Wärmemanagementkomponente (13) ferner umfasst:
eine Vermeidungsstruktur (134), die dazu ausgelegt ist, einen Raum bereitzustellen, der es dem Druckentlastungsmechanismus ermöglicht, (213) betätigt zu werden, und
wobei die Wärmemanagementkomponente (13) an der Mehrzahl von Batteriezellen (20) befestigt ist, um eine Vermeidungskammer (134a) zwischen der Vermeidungsstruktur (134) und dem Druckentlastungsmechanismus (213) zu bilden, oder die Vermeidungsstruktur (134) ein Durchgangsloch ist, das die Wärmemanagementkomponente (13) durchdringt.

9. Batterie nach Anspruch 8, ferner umfassend:
eine Sammelkammer (11b), die dazu ausgelegt ist, die Emissionen von der Batteriezelle (20) und der Wärmemanagementkomponente (13) zu sammeln, wenn der Druckentlastungsmechanismus (213) betätigt wird,
wobei die Vermeidungskammer (134a) und die Sammelkammer (11b) durch die Wärmemanagementkomponente (13) isoliert sind, oder die Vermeidungsstruktur (134) und die Sammelkammer (11b) miteinander in Kommunikation stehen.

10. Vorrichtung, umfassend die Batterie nach den Ansprüchen 1-9, wobei die Batterie dazu ausgelegt ist, elektrische Energie bereitzustellen.

11. Verfahren zum Herstellen einer Batterie, umfassend:
Bereitstellen eine Mehrzahl von Batteriezellen (20), die dazu ausgelegt sind, über eine Buskomponente (12) elektrisch miteinander verbunden zu sein;
Bereitstellen eines Abdeckungskörpers (111), umfassend einen Aufnahmeraum (111a), der dazu ausgelegt ist, die Buskomponente (12) zu installieren;
Bereitstellen eines Isolierteils (113), das an dem Abdeckkörper (111) befestigt und zum Abdecken zumindest der Buskomponente (12) bereitgestellt ist;
Bereitstellen eine Batteriemanagementeinheit, die ein Steuermodul und eine elektrische Verbindungskomponente umfasst, und das Steuermodul und die Buskomponente (12) durch die elektrische Verbindungskomponente verbunden sind, wobei die elektrische Verbindungskomponente in den Abdeckkörper (111) eingebettet ist; und
Bereitstellen eines Gehäusemantels (112), wobei der Gehäusemantel (112) und der Abdeckkörper (111) gemeinsam ein Gehäuse (11) umschließen und bilden, das dazu ausgelegt ist, die Mehrzahl von Batteriezellen (20) aufzunehmen, und das Steuermodul außerhalb des Gehäuses (11) bereitgestellt ist.

12. Vorrichtung zum Herstellen einer Batterie, umfassend:
ein Batteriezellenherstellungsmodul, das dazu ausgelegt ist, eine Mehrzahl von Batteriezellen (20) herzustellen, die dazu ausgelegt sind, über eine Buskomponente (12) elektrisch miteinander verbunden zu sein;
ein Abdeckkörperherstellungsmodul, das dazu ausgelegt ist, einen Abdeckkörper (111) herzustellen, der einen Aufnahmeraum (11a) umfasst, der dazu ausgelegt ist, die Buskomponente (12) zu installieren;
ein Isolierteilherstellungsmodul, das dazu ausgelegt ist, ein Isolierteil (113) herzustellen, das an dem Abdeckungskörper (111) befestigt und dazu bereitgestellt ist, zumindest die Buskomponente (12) abzudecken;
ein Batteriemanagementeinheitsherstellungsmodul, das dazu ausgelegt ist, eine Batteriemanagementeinheit herzustellen, die ein Steuermodul und eine elektrische Verbindungskomponente umfasst, wobei das Steuermodul und die Buskomponente (12) durch die elektrische Verbindungskomponente verbunden sind und die elektrische Verbindungskomponente in dem Abdeckkörper (111) eingebettet ist; und
ein Gehäusemantelherstellungsmodul, das dazu ausgelegt ist, einen Gehäusemantel (112) herzustellen, wobei der Gehäusemantel (112) und der Abdeckkörper (111) gemeinsam ein Gehäuse (11) umschließen und bilden, das dazu ausgelegt ist, die Mehrzahl von Batteriezellen (20) aufzunehmen, und das Steuermodul außerhalb des Gehäuses (11) bereitgestellt ist.

## Revendications

1. Batterie (10), comprenant :
une pluralité de cellules de batterie (20) configurées pour être connectées électriquement les unes aux autres à travers un composant de bus (12) ;
un corps de couvercle (111) comprenant un espace de logement (111a) configuré pour installer le composant de bus (12) ;
une partie isolante (113) fixée au corps de couvercle (111) et prévue pour couvrir au moins le composant de bus (12) ;
une unité de gestion de batterie comprenant un module de commande et un composant de connexion électrique, le module de commande et le composant de bus (12) sont connectés par le composant de connexion électrique, le composant de connexion électrique est intégré dans le corps de couvercle (111) ; et
une coque de boîtier (112), la coque de boîtier (112) et le corps de couvercle (111) renferment collectivement et forment un boîtier (11) configuré pour loger la pluralité de cellules de batterie (20), et
le module de commande est prévu à l'extérieur du boîtier (11).

2. Batterie selon la revendication 1, l'espace de logement (111a) étant un trou traversant formé sur le corps de couvercle (111), le composant de bus (12) traversant le trou traversant et étant fixé sur le corps de couvercle (111), et la partie isolante (113) étant appliquée ou assemblée au corps de couvercle (111) .

3. Batterie selon la revendication 1, l'espace de logement (111a) étant un trou borgne formé sur le corps de couvercle (111), le composant de bus (12) étant capable de faire entrer l'espace de logement (111a) à travers une ouverture de l'espace de logement (111a), et au moins une partie du composant de bus (12) étant logée dans l'espace de logement (111a), et la partie isolante (113) étant formée d'un seul tenant avec le corps de couvercle (111).

4. Batterie selon l'une quelconque des revendications 1 à 3, le composant de connexion électrique comprenant une carte de circuit configurée pour être connectée électriquement à la pluralité de cellules de batterie (20) afin de capturer des signaux de température ou de tension de la pluralité de cellules de batterie (20).

5. Batterie selon l'une quelconque des revendications 1 à 4, au moins une cellule de batterie (20) parmi la pluralité de cellules de batterie (20) comprenant un mécanisme de libération de pression (213), et le mécanisme de libération de pression (213) étant configuré pour être actionné lorsqu'une pression interne ou une température de la ou des cellules de batterie (20) atteint un seuil, pour libérer la pression interne,
le mécanisme de libération de pression (213) et le composant de bus (12) étant agencés respectivement sur des côtés différents de la ou des cellules de batterie (20), de sorte que lorsque le mécanisme de libération de pression (213) est actionné, des émissions provenant de la ou des cellules de batterie (20) sont déchargées dans une direction s'éloignant du composant de bus (12) .

6. Batterie selon la revendication 5, comprenant en outre : un composant de gestion thermique (13), le composant de gestion thermique (13) étant configuré pour loger un fluide afin de régler une température de la cellule de batterie (20), et le composant de gestion thermique (13) étant configuré pour être endommagé lorsque le mécanisme de libération de pression (213) est actionné, de sorte que les émissions provenant de la cellule de batterie (20) traversent le composant de gestion thermique (13).

7. Batterie selon la revendication 6, le composant de gestion thermique (13) étant configuré pour être endommagé lorsque le mécanisme de libération de pression (213) est actionné, pour permettre au fluide de s'écouler vers l'extérieur.

8. Batterie selon la revendication 6 ou 7, le composant de gestion thermique (13) comprenant en outre :
une structure d'évitement (134) configurée pour prévoir un espace permettant au mécanisme de libération de pression (213) d'être actionné, et
le composant de gestion thermique (13) étant fixé à la pluralité de cellules de batterie (20) pour former une chambre d'évitement (134a) entre la structure d'évitement (134) et le mécanisme de libération de pression (213), ou la structure d'évitement (134) étant un trou traversant pénétrant le composant de gestion thermique (13) .

9. Batterie selon la revendication 8, comprenant en outre :
une chambre de collecte (11b) configurée pour collecter les émissions provenant de la cellule de batterie (20) et le composant de gestion thermique (13) lorsque le mécanisme de libération de pression (213) est actionné, la chambre d'évitement (134a) et la chambre de collecte (11b) étant isolées par le composant de gestion thermique (13), ou la structure d'évitement (134) et la chambre de collecte (11b) étant en communication l'une avec l'autre.

10. Appareil comprenant la batterie selon les revendications 1 à 9, la batterie étant configurée pour fournir de l'énergie électrique.

11. Procédé permettant de produire une batterie, comprenant :
la fourniture d'une pluralité de cellules de batterie (20) configurées pour être connectées électriquement les unes aux autres à travers un composant de bus (12) ;
la fourniture d'un corps de couvercle (111) comprenant un espace de logement (111a) configuré pour installer le composant de bus (12) ;
la fourniture d'une partie isolante (113) fixée au corps de couvercle (111) et prévue pour couvrir au moins le composant de bus (12) ;
la fourniture d'une unité de gestion de batterie comprenant un module de commande et un composant de connexion électrique, le module de commande et le composant de bus (12) sont connectés par le composant de connexion électrique, le composant de connexion électrique est intégré dans le corps de couvercle (111) ; et
la fourniture d'une coque de boîtier (112), la coque de boîtier (112) et le corps de couvercle (111) renferment collectivement et forment un boîtier (11) configuré pour loger la pluralité de cellules de batterie (20), et le module de commande est prévu à l'extérieur du boîtier (11).

12. Dispositif permettant de produire une batterie, comprenant :
un module de production de cellules de batterie configuré pour produire une pluralité de cellules de batterie (20) configurées pour être connectées électriquement les unes aux autres à travers un composant de bus (12) ;
un module de production de corps de couvercle configuré pour produire un corps de couvercle (111) comprenant un espace de logement (111a) configuré pour installer le composant de bus (12) ;
un module de production de partie isolante configuré pour produire une partie isolante (113) fixée au corps de couvercle (111) et prévue pour couvrir au moins le composant de bus (12) ;
un module de production d'unités de gestion de batterie configuré pour produire une unité de gestion de batterie comprenant un module de commande et un composant de connexion électrique, le module de commande et le composant de bus (12) sont connectés par le composant de connexion électrique, le composant de connexion électrique est intégré dans le corps de couvercle (111) ; et
un module de production de coques de boîtier configuré pour produire une coque de boîtier (112), la coque de boîtier (112) et le corps de couvercle (111) renferment collectivement et forment un boîtier (11) configuré pour loger la pluralité de cellules de batterie (20), et le module de commande est prévu à l'extérieur du boîtier (11).
